# FASCICULE DE BREVET EUROPEEN

(11) **EP 0 368 418 B1**
(45) Date de publication et mention de la délivrance du brevet: **21.07.1993**
(21) Numéro de dépôt: 89202826.7
(22) Date de dépôt: 08.11.1989
(51) Int. Cl.: G10K 11/34

(54) **Dispositif de focalisation tridimensionnelle d'un faisceau ultrasonore**
Vorrichtung zum Fokussieren eines Ultraschallbündels in drei Dimensionen
Device for focussing an ultrasonic beam in three dimensions

(30) Priorité: 10.11.1988 FR 8814686
(43) Date de publication de la demande: 16.05.1990
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Pesque, Patrick Société Civile S.P.I.D., F-75007 Paris (FR)
(74) Mandataire: Landousy, Christian

(56) Documents cités:
- EP-A- 0 210 624
- US-A- 4 325 257
- US-A- 4 747 192
- ELECTRO/CONF. REC, 1977, mémoire 13/2, pages 1-5, IEEE, New York, US; R.D. MELEN et al.: "System application of charge coupled device ultrasonic lenses"

## Description

La présente invention concerne un dispositif de focalisation tridimensionnelle d'un faisceau ultrasonore.

L'invention trouve une application particulièrement avantageuse dans le domaine de l'échographie médicale, et plus spécialement dans celui de la formation d'images d'organes.

Comme d'autres méthodes d'imagerie médicale, l'échographie tend de plus en plus à se développer vers la réalisation d'images en trois dimensions. Toutefois, cette extension tridimensionnelle pose des problèmes spécifiques à l'échographie. D'abord, la cadence d'acquisition de l'information est limitée par la vitesse de propagation des ondes dans les tissus biologiques; à titre d'exemple, une vitesse de 1500 m/s donne 5000 lignes/s pour une profondeur de 15 cm. Si l'on veut réaliser une image plane à l'aide de 100 lignes, et une image volumique de 10 plans, on ne dispose alors que de 5 images par plan et par seconde, ce qui est très faible et ne permet pas d'envisager un traitement en temps réel. D'autre part, l'observation d'organes à travers des fenêtres acoustiques de dimensions limitées (2cmx2cm par exemple de passage entre les côtes pour le coeur) exige des sondes de faibles dimensions qui se prêtent mal à l'imagerie en trois dimensions quand on doit empiler plusieurs plans de coupe.

Actuellement, on réalise des images tridimensionnelles en déplaçant mécaniquement une barrette linéaire ou un monoélément piézoélectrique afin d'explorer dans toutes les directions l'espace soumis à examen. Toutefois, ces dispositifs connus ont l'inconvénient d'être lents, dans la mesure où la vitesse de balayage est limitée par les mouvements mécaniques. Se trouve donc exclue la possibilité d'acquisition en parallèle des signaux échographiques, qui permet d'augmenter la cadence de formation des images comme cela a été proposé dans la demande de brevet européen EP-A- 0 210 624.

Dans l'absolu, la solution la plus naturelle au problème de l'imagerie échographique en trois dimensions serait d'utiliser une sonde de transducteurs piézoélectriques élémentaires disposés en un réseau bidimensionnel. En effet, associé à une électronique de formation de voies appropriée, ce type de sonde permet en théorie de focaliser les signaux échographiques dans toutes les directions de l'espace. Il suffit pour cela d'appliquer aux éléments piézoélectriques la loi de phase qui convient. De plus, l'utilisation de dispositifs de formation de voies en parallèle (émission et/ou réception simultanée dans plusieurs directions) peut être envisagée de façon à augmenter la cadence de la prise d'information, ce qui conduit à une étude du milieu biologique quasiment en temps réel. Enfin, le problème des fenêtres acoustiques limitées est résolu par angulation du faisceau ultrasonore à l'aide de moyens électroniques.

Cependant, si la technique qui vient d'être décrite résoud, au moins théoriquement, les problèmes spécifiques de l'imagerie échographique tridimensionnelle, elle reste pourtant extrêmement lourde et coûteuse à mettre en oeuvre. En effet, le réseau de phase à deux dimensions nécessaire pour obtenir une qualité d'image satisfaisante devrait comporter 64x64 transducteurs piézoélectriques élémentaires au pas d'environ λ/2. Un tel nombre de transducteurs, 4096, pose de sérieux problèmes non seulement pour la fabrication de la sonde, mais également pour la réalisation de l'électronique de formation de voies qui devrait amplifier, retarder et sommer 4096 canaux.

Aussi, le problème technique à résoudre par la présente invention est de proposer un dispositif de focalisation tridimensionnelle d'un faisceau ultrasonore, qui comporterait un nombre moins élevé de transducteurs piézoélectriques élémentaires, et qui, de ce fait, serait plus facile à réaliser, et dont l'électronique de commande serait plus simple et moins onéreuse.

La solution au problème technique posé consiste, selon la présente invention, en ce que le dispositif de focalisation tridimensionnelle comporte :
- une barrette de phase, cylindrique de génératrice X′X, comprenant MxN transducteurs piézoélectriques élémentaires rangés dans une matrice courbe de M lignes parallèles à la génératrice X′X et N colonnes courbes perpendiculaires auxdites lignes,
- un circuit de formation de plans Pⱼ de focalisation passant par la génératrice X′X, constitué par :
   * un multiplexeur qui, d'une part, sur les MxN signaux reçus par ladite barrette, sélectionne, pour chaque colonne i, les mₒ signaux sⱼₖⁱ fournis par les transducteurs piézoélectriques élémentaires dont le numéro de ligne est j+k avec k=0,1,...,mₒ-1, mₒ étant un nombre donné représentant la largeur de l'ouverture du faisceau ultrasonore, et qui, d'autre part, réalise la somme Sⱼₖⁱ des signaux sⱼₖⁱ et sⱼⁱ,mₒ₋ₖ₋₁ fournis par des transducteurs piézoélectriques élémentaires symétriques par rapport au centre de l'ouverture définie en largeur par mₒ,
   * N circuits de focalisation plane identiques qui, pour chaque colonne i, appliquent aux signaux Sⱼₖⁱ un retard τₖ de remise en phase, et réalisent la somme Sⱼⁱ des signaux Sⱼₖⁱ ainsi remis en phase, le plan Pⱼ de focalisation étant alors constitué par le plan médiateur de l'ouverture de largeur mₒ,
- un circuit d'angulation qui, pour j donné, applique, avant de les sommer, aux N signaux Sⱼⁱ une loi de phase définissant, dans le plan Pⱼ de focalisation, une direction de focalisation D.

En pratique, on choisira une barrette de phase courbe de 16 lignes et de 64 colonnes, ce qui correspond à 1024 éléments piézoélectriques au lieu de 4096, soit 4 fois moins, d'où une plus grande facilité de fabrication. D'autre part, avec un nombre mₒ de lignes actives égal à 8, par exemple, et le repliement des éléments symétriques, on aboutit à 64 circuits de focalisation plane identiques relativement simples puisqu'ils appliquent chacun seulement 3 retards τₖ de remise en phase indépendants de j. Comme on le verra en détail plus loin, une des caractéristiques essentielles du dispositif de focalisation tridimensionnelle selon l'invention est de rendre séparables les lois de phase, de focalisation plane d'une part, et d'angulation d'autre part. Cette disposition a pour conséquence avantageuse de n'exiger qu'un seul circuit d'angulation. Aussi, le dispositif selon l'invention ne comporte au total que 64+1=65 circuits de focalisation tridimensionnelle au lieu de 4096 nécessaires pour la mise en oeuvre d'une barrette bidimensionnelle plane de 64x64 éléments piézoélectriques. La focalisation tridimensionnelle est réalisée en faisant varier la position des plans Pⱼ de focalisation à l'aide du multiplexeur et la direction de focalisation D par modification de la loi de phase du circuit d'angulation.

De façon à augmenter la cadence de formation d'images, il est prévu que le dispositif de focalisation tridimensionnelle conforme à l'invention dispose de P circuits d'angulation en parallèle de P faisceaux ultrasonores provenant de P directions de focalisation Dₗ(l=1,2,...,P). La cadence d'acquisition des images est alors multipliée par P.

La description qui va suivre en regard des dessins annexés, donnés à titre d'exemples non limitatifs, fera bien comprendre en quoi consiste l'invention et comment elle peut être réalisée.

La figure 1 montre, en perspective, une barrette de phase courbe et la définition de ses principaux paramètres.

La figure 2 est une vue en coupe de la barrette de phase de la figure 1.

La figure 3 est le schéma d'un circuit de formation de plans de focalisation.

La figure 4 est le schéma d'un circuit d'angulation.

La figure 5 montre schématiquement un dispositif d'angulation en parallèle.

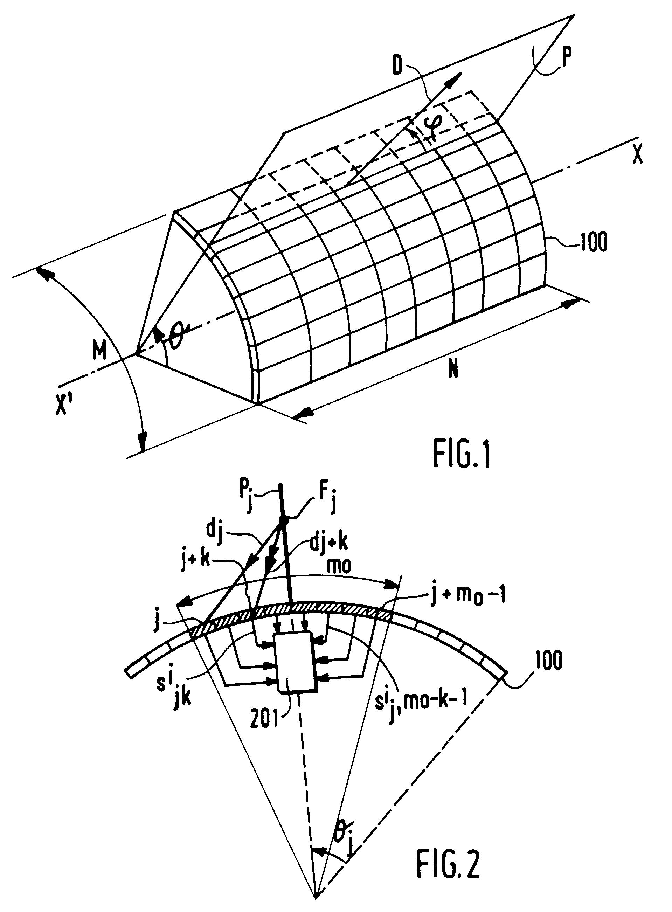

La figure 1 montre, en perspective, une barrette 100 de phase ayant une forme cylindrique de génératrice X′X. Cette barrette comprend MxN transducteurs piézoélectriques élémentaires rangés dans une matrice courbe de M lignes parallèles à la génératrice X′X et N colonnes courbes perpendiculaires auxdites lignes. A titre d'exemple, M et N peuvent valoir respectivement 16 et 64, ce qui correspond en tout à 1024 éléments piézoélectriques. Ce type de barrette courbe peut être réalisé conformément au mode de réalisation décrit dans le brevet américain US-A- 4 747 192.

La barrette 100 de phase de la figure 1 est destinée à équiper un dispositif de focalisation tridimensionnelle d'un faisceau ultrasonore fonctionnant sur le principe général suivant : une première focalisation plane définit un plan de focalisation P passant par la génératrice X′X et repéré par un angle ϑ, puis une angulation, dans le plan P, détermine la direction D de focalisation, l'angle entre la génératrice X′X et la direction D étant noté φ. La focalisation tridimensionnelle recherchée est obtenue en faisant varier de façon indépendante les angles ϑ et φ selon des moyens de mise en oeuvre qui sont maintenant décrits.

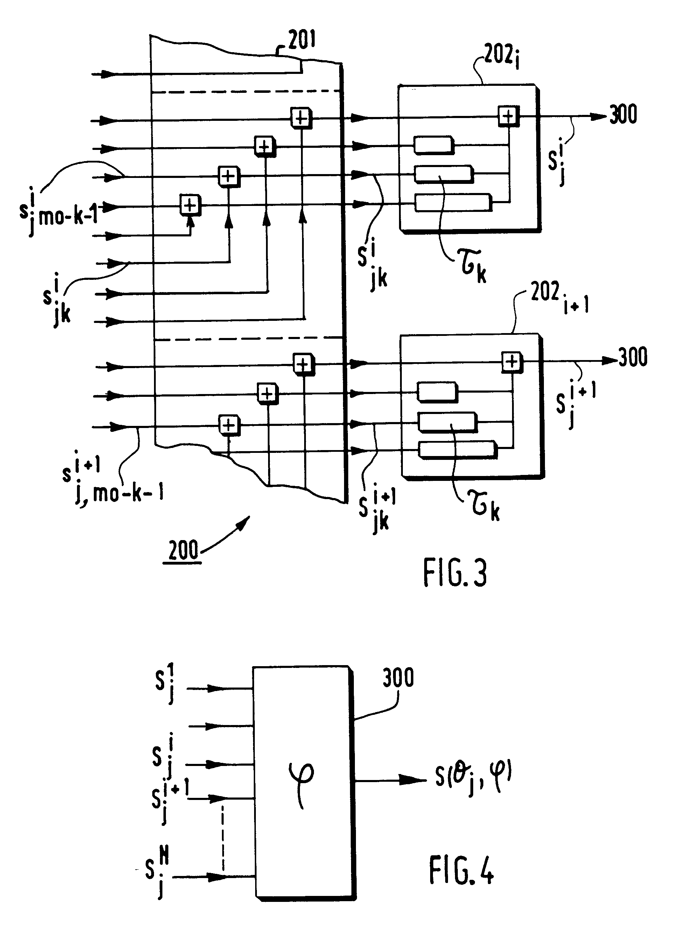

Un multiplexeur 201, représenté à la figure 3, et faisant partie d'un circuit 200 de formation de plans de focalisation, sélectionne, parmi les MxN signaux reçus par la barrette 100, mₒ signaux sⱼₖⁱ fournis par les transducteurs piézoélectriques élémentaires appartenant à la même colonne i (i=1,2,...,N) et dont le numéro de ligne est j+k avec k=0,1,...,mₒ-1.

Cette action du multiplexeur 201 sur la barrette 100 est résumée à la figure 2 sur laquelle les éléments piézoélectriques rendus efficaces par le multiplexeur sont représentés par des hachures. mₒ est un nombre donné qui, comme l'indique la figure 2, correspond à la largeur de l'ouverture du faisceau ultrasonore, sa longueur étant celle de la barrette 100. D'autre part, conformément à la figure 3, le multiplexeur 201 réalise la somme Sⱼₖⁱ des signaux sⱼₖⁱ et sⱼⁱ,mₒ-k-1 fournis, ainsi que le montre la figure 2, par des transducteurs piézoélectriques élémentaires symétriques par rapport au centre de l'ouverture définie en largeur par mₒ.

Ensuite, revenant à la figure 3, N circuits 202ᵢ de focalisation plane identiques appliquent aux signaux Sⱼₖⁱ, pour chaque colonne i, un retard τₖ de remise en phase. Dans l'exemple de réalisation de la figure 3 où mₒ=8, il est nécessaire de créer, à l'aide de 3 lignes à retard, 3 retards τₖ, à savoir τ ₁, τ ₂, τ ₃. Du fait de la forme cylindrique de la barrette 100 de phase, les quantités τₖ sont indépendantes du nombre j, avec comme conséquence éminemment avantageuse la simplification de l'électronique de traitement puisque chaque circuit 202ᵢ de focalisation plane peut traiter tous les signaux Sⱼₖⁱ quelque soit la valeur de j, donc quelque soit la position de l'ouverture latérale du faisceau ultrasonore. Les circuits 202ᵢ de focalisation réalisent ensuite la somme Sⱼⁱ des signaux Sⱼₖⁱ ainsi remis en phase. Le plan Pⱼ de focalisation est alors constitué, comme indiqué à la figure 2, par le plan médiateur de l'ouverture de largeur mₒ.

Le retard τₖ est donné par (dⱼ₊ₖ-dⱼ)/C, C étant la vitesse de l'onde ultrasonore et dⱼ₊ₖ et dⱼ étant la distance des éléments piézoélectriques de numéro de ligne j+k et j au point Fⱼ de focalisation situé dans le plan Pⱼ de focalisation. τₖ dépend donc de la profondeur d'exploration, du pas de lignes et de la courbure de la barrette 100 de phase.

Ainsi que le montre la figure 4, un circuit 300 d'angulation applique pour une valeur de j donnée, une loi de phase aux N signaux Sⱼⁱ, puis fait la somme des signaux Sⱼⁱ déphasés de façon à obtenir le signal final S(ϑⱼ,φ), l'angle φ définissant, dans le plan Pⱼ de focalisation, une direction de focalisation D. Le circuit 300 d'angulation et la loi de phase appliquée sont connus en soi et classiquement utilisés en imagerie échographique à deux dimensions.

Le balayage spatial est réalisé en faisant varier le nombre j, c'est à dire en imposant au multiplexeur 201 de déplacer par pas discret l'angle ϑⱼ qui fixe la position de l'ouverture latérale mₒ du faisceau ultrasonore. De son côté, l'angle φ peut être modifié en changeant la loi de phase appliquée par le circuit 300 d'angulation.

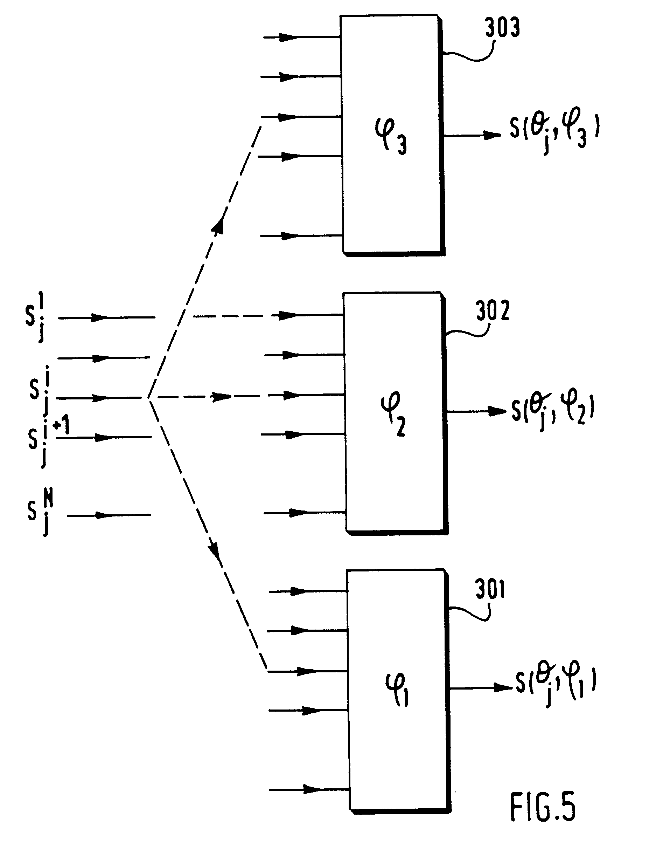

Dans le but d'augmenter la cadence de saisie des images, et conformément à l'enseignement de la demande de brevet européen EP-A- 0 210 624, la figure 5 montre que le dispositif de focalisation selon l'invention dispose de P=3 circuits 301, 302, 303 d'angulation en parallèle, à l'aide de 3 lois de phase adéquates, de 3 faisceaux ultrasonores provenant de 3 directions de focalisation D₁, D₂, D₃ repérées par les angles φ ₁, φ ₂, φ ₃. La cadence de formation d'images est alors multipliée par P=3.

## Revendications

1. Dispositif de focalisation tridimensionnelle d'un faisceau ultrasonore, caractérisé en ce qu'il comporte :
- une barrette (100) de phase, cylindrique de génératrice X′X, comprenant MxN transducteurs piézoélectriques élémentaires rangés dans une matrice courbe de M lignes parallèles à la génératrice X′X et N colonnes courbes perpendiculaires auxdites lignes,
- un circuit (200) de formation de plans Pⱼ de focalisation passant par la génératrice X′X, constitué par :
* un multiplexeur (201) qui, d'une part, sur les MxN signaux reçus par ladite barrette (100), sélectionne, pour chaque colonne i, les mₒ signaux sⱼₖⁱ fournis par les transducteurs piézoélectriques élémentaires dont le numéro de ligne est j+k avec k=0,1,...,mₒ-1, mₒ étant un nombre donné représentant la largeur de l'ouverture du faisceau ultrasonore, et qui, d'autre part, réalise la somme Sⱼₖⁱ des signaux sⱼₖⁱ et sⱼⁱmₒ-k-1 fournis par des transducteurs piézoélectriques élémentaires symétriques par rapport au centre de l'ouverture définie en largeur par mₒ,
* N circuits (202ᵢ) de focalisation plane identiques qui, pour chaque colonne i, appliquent aux signaux Sⱼₖⁱ un retard τₖ de remise en phase, et réalisent la somme Sⱼⁱ des signaux Sⱼₖⁱ ainsi remis en phase, le plan Pⱼ de focalisation étant alors constitué par le plan médiateur de l'ouverture de largeur mₒ,
- un circuit (300) d'angulation qui, pour j donné, applique, avant de les sommer, aux N signaux Sⱼⁱ une loi de phase définissant, dans le plan Pⱼ de focalisation, une direction de focalisation D.

2. Dispositif de focalisation tridimensionnelle selon la revendication 1, caractérisé en ce qu'il dispose de P circuits (301, 302, 303) d'angulation en parallèle de P faisceaux ultrasonores provenant de P directions de focalisation Dₗ (l=1,2,...,P).

## Claims

1. A device for three-dimensional focusing of an ultrasonic beam, characterized in that it comprises
- a phased array (100) which has a cylindrical shape with a generatrix X'X and which comprises M x N elementary piezoelectric transducers which are arranged in a curved matrix consisting of M rows extending parallel to the generatrix X'X and N curved columns extending perpendicularly to said rows,
- a circuit (200) for forming focusing planes Pⱼ which extend through the generatrix X'X, which circuit is formed by:
* a multiplexer (201) which selects, for each column i, from the M x N signals received by said array (100) the mₒ signals Sⱼₖⁱ supplied by the elementary piezoelectric transducers whose row number is j + k, where k = 0, 1, ..., mₒ-1, where mₒ is a given number representing the aperture width of the ultrasonic beam, and which also forms the sum Sⱼₖⁱ of the signals Sⱼₖⁱ and sⱼⁱmₒ-k-1 supplied by the elementary piezoelectric transducers which are symmetrically positioned with respect to the centre of the aperture whose width is defined by mₒ,
* N identical plane focusing circuits (202ᵢ) which apply, for each column i, a phase-resetting delay τₖ to the signals Sⱼₖⁱ and which form the sum Sⱼⁱ of the signals Sⱼₖⁱ thus reset in phase, the focusing plane Pⱼ thus being formed by the median plane of the aperture having the width mₒ,
- an angulation circuit 300) which applies, for j given, a phase rule to the N signals Sⱼⁱ prior to their summing, which rule defines a focusing direction D in the focusing plane Pⱼ.

2. A three-dimensional focusing device as claimed in Claim 1, characterized in that it comprises P circuits (301, 302, 303) for parallel angulation of P ultrasonic beams from P focusing directions Dl(l = 1,2, ..., P) .

## Patentansprüche

1. Anordnung zum dreidimensionalen Fokussieren eines Ultraschallbündels, dadurch gekennzeichnet, daß sie folgende Elemente enthält:
- einen zylindrischen Phasenbogen (100) mit einer Erzeugenden X'X, der MxN piezoelektrische Elementarwandler enthält, die in einer gekrümmten Matrix von M parallel zur Erzeugenden X'X verlaufenden und Zeilen von N gekrümmten Spalten angeordnet sind, die senkrecht zu diesen Zeilen verlaufen,
- eine Schaltung (200) zum Erzeugen von Fokussierebenen Pⱼ, die durch die Erzeugende X'X gehen, wobei die Schaltung aus folgenden Elementen besteht:
* einen Multiplexer (201), der einerseits für die aus dem Bogen (100) empfangenen MxN Signale für jede Spalte i die mₒ Signale sⱼₖⁱ aus den piezoelektrischen Elementarwandlem wählt, wobei die Zeilennummer j + k ist, wobei k=0, 1, ..., mₒ-1 ist, wobei mₒ eine vorgegebene Anzahl ist, die die Größe der Öffnung des Ultraschallbündels darstellt, und die andererseits die Summe Sⱼₖⁱ der Signale sⱼₖⁱ und sⱼⁱ,mₒ-k-1 aus den piezoelektrischen Elementarwandlern verwirklicht, die in bezug auf die Mitte der Öffnung symmetrisch sind, deren Größe durch mₒ definiert wird,
* N gleiche Schaltungen (202ᵢ) für flache Fokussierung, die für jede Spalte i bei den Signalen Sⱼₖⁱ eine Verzögerung τₖ bewirken um sie gleichphasig zu machen, und die Summe Sⱼⁱ der so gleichphasig gemachten Signalen Sⱼₖⁱ bilden, wobei die Fokussierebene Pⱼ also durch die Mittelwertebene der Öffnung mit der Größe mₒ gebildet wird,
- eine Winkeländerungsschaltung (300), die, wenn j gegeben ist, vor der Summierung der Signale die N Signale Sⱼⁱ einem Phasengesetz unterwirft, wodurch in der Fokussierebene Pⱼ eine Fokussierrichtung D definiert wird.

2. Anordnung zum dreidimensionalen Fokussieren nach Anspruch 1, dadurch gekennzeichnet, daß sie über P parallele Winkeländerungsschaltungen (301, 302, 303) für P Ultraschallbündel aus P Fokussierrichtungen Dₗ(l = 1, 2, ..., P) verfügt.
